# EUROPEAN PATENT APPLICATION

(11) **EP 4 836 094 A1**
(43) Date of publication of application: **04.11.2026**
(21) Application number: 24927988.6
(22) Date of filing: 01.08.2024
(51) Int. Cl.: H01M 10/6556

(54) **HEAT EXCHANGE ASSEMBLY, BOX BODY, BATTERY, AND ELECTRICAL DEVICE**

(30) Priority: 06.03.2024 CN 202410256977
(71) Applicant: Contemporary Amperex Technology Co., Limited, Ningde, Fujian 352100 (CN)
(72) Inventor: HOU, Yuepan, Ningde, Fujian 352100 (CN); HUANG, Xiaoteng, Ningde, Fujian 352100 (CN); RUAN, Danxia, Ningde, Fujian 352100 (CN)
(74) Representative: Kraus & Lederer PartGmbB
(86) International application number: PCT/CN2024/109291
(87) International publication number: WO 2025/185055

(57) **Abstract**

The present application provides a heat exchange assembly (13), a box body (10), a battery (100), and an electrical device. The heat exchange assembly (13) comprises a first plate body (131) and a second plate body (132). The first plate body (131) has a first plate surface (1311), and the first plate body (131) comprises a first reinforcement layer member (1312). The second plate body (132) and the first plate body (131) are arranged in a stacked manner, and the second plate body (132) has a second plate surface (1321). A heat exchange flow channel (133) is provided on the first plate surface (1311) and/or the second plate surface (1321). At least part of the projection of the heat exchange flow channel (133) on a reference plane overlaps with the projection of the first reinforcement layer member (1312) on the reference plane, and the reference plane is perpendicular to the stacking direction of the first plate body (131) and the second plate body (132).

## Description

### CROSS REFERENCE

The present application makes reference to Chinese Patent Application No. 202410256977.3 filed on March 6, 2024 and entitled "HEAT EXCHANGE ASSEMBLY, BOX BODY, BATTERY, AND ELECTRICAL DEVICE", which is incorporated herein by reference in its entirety.

### TECHNICAL FIELD

The present application relates to the field of battery technologies, and in particular, to a heat exchange assembly, a box body, a battery, and an electrical device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

A heat exchange assembly in a battery is configured to circulate a heat exchange medium, to regulate the temperature of the battery. However, the heat exchange assembly is prone to deformation under the action of external force due to its low structural strength.

### SUMMARY

One of the objectives of the embodiments of the present application is to provide a heat exchange assembly, a box body, a battery, and an electrical device, aiming to solve the technical problem of low structural strength of the heat exchange assembly in the related art.

To solve the above technical problem, the embodiments of the present application adopt the following technical solutions: A heat exchange assembly is provided, including:
a first plate body, having a first plate surface and including a first reinforcement layer member; and
a second plate body, stacked with the first plate body and having a second plate surface,
a heat exchange flow channel being provided on the first plate surface and/or the second plate surface, the first plate surface being hermetically connected to the second plate surface to enclose the heat exchange flow channel, and at least part of the projection of the heat exchange flow channel on a reference plane overlapping with the projection of the first reinforcement layer member on the reference plane, where the reference plane is perpendicular to the stacking direction of the first plate body and the second plate body.

The heat exchange assembly according to the embodiment of the present application has the following beneficial effects: In the heat exchange assembly according to the embodiment of the present application, the first reinforcement layer member is disposed on the first plate body. Since at least part of the projection of the heat exchange flow channel on the reference plane overlaps with the projection of the first reinforcement layer member on the reference plane, the first reinforcement layer member can cover at least part of the heat exchange flow channel, such that at least the structural strength of the portion of the heat exchange assembly provided with the heat exchange flow channel can be improved, thereby effectively reducing the risk of deformation of the heat exchange assembly.

In some embodiments of the present application, the first plate body further includes a first connection layer member stacked on one side of the first reinforcement layer member facing the second plate body, where the first connection layer member has the first plate surface.

By adopting the above technical solution, the first plate body and the second plate body can be conveniently connected.

In some embodiments of the present application, the first connection layer member is welded to the second plate body.

By adopting the above technical solution, the connection process between the first plate body and the second plate body is effectively simplified, thereby effectively improving the production efficiency of the heat exchange assembly.

In some embodiments of the present application, the first connection layer member is an aluminum layer member.

By adopting the above technical solution, the first connection layer member can better adapt to the welding temperature, thereby effectively improving the welding effect between the first plate body and the second plate body.

In some embodiments of the present application, the first connection layer member includes at least one of a 1-series aluminum layer member, a 3-series aluminum layer member, and a 4-series aluminum layer member.

By adopting the above technical solution, the first connection layer member can better adapt to the welding temperature, thereby further improving the welding effect between the first plate body and the second plate body.

In some embodiments of the present application, the first connection layer member has a thickness of 0.2 mm to 0.9 mm.

By adopting the above technical solution, the risk of the first connection layer member being burned through is effectively reduced, thereby effectively reducing the risk of contact between the first reinforcement layer member and a heat exchange medium, and effectively alleviating corrosion of the first reinforcement layer member.

In some embodiments of the present application, the first connection layer member includes a first layer body and a second layer body, where the first layer body is stacked between the first reinforcement layer member and the second layer body, the second layer body has the first plate surface, and the second layer body has a lower melting point than the first layer body.

By adopting the above technical solution, the first connection layer member can better adapt to the welding temperature, thereby effectively improving the welding effect between the first plate body and the second plate body.

In some embodiments of the present application, the first layer body is a 3-series aluminum layer body or a 1-series aluminum layer body, and the second layer body is a 4-series aluminum layer body.

By adopting the above technical solution, the first connection layer member can better adapt to the welding temperature, thereby further improving the welding effect between the first plate body and the second plate body.

In some embodiments of the present application, the first layer body has a thickness of 0.1 mm to 0.85 mm.

By adopting the above technical solution, the risk of the first connection layer member being burned through is effectively reduced, thereby effectively reducing the risk of contact between the first reinforcement layer member and the heat exchange medium, and effectively alleviating corrosion of the first reinforcement layer member.

In some embodiments of the present application, the second layer body has a thickness of 0.05 mm to 0.1 mm.

By adopting the above technical solution, the penetration depth requirement for welding the first plate body and the second plate body can be met, thereby effectively improving the welding effect between the first plate body and the second plate body.

In some embodiments of the present application, the first reinforcement layer member has the first plate surface.

By adopting the above technical solution, the first reinforcement layer member may constitute the entire first plate body, which not only effectively improves the structural strength of the heat exchange assembly, but also effectively simplifies the structure of the heat exchange assembly.

In some embodiments of the present application, the second plate body includes a second connection layer member, where the second connection layer member has the second plate surface.

By adopting the above technical solution, the first plate body and the second plate body can be conveniently connected.

In some embodiments of the present application, the second connection layer member is welded to the first plate body.

By adopting the above technical solution, the connection process between the first plate body and the second plate body is effectively simplified, thereby effectively improving the production efficiency of the heat exchange assembly.

In some embodiments of the present application, the second connection layer member is an aluminum layer member.

By adopting the above technical solution, the second connection layer member can better adapt to the welding temperature, thereby effectively improving the welding effect between the first plate body and the second plate body.

In some embodiments of the present application, the second connection layer member includes at least one of a 1-series aluminum layer member, a 3-series aluminum layer member, and a 4-series aluminum layer member.

By adopting the above technical solution, the second connection layer member can better adapt to the welding temperature, thereby further improving the welding effect between the first plate body and the second plate body.

In some embodiments of the present application, the second connection layer member has a thickness of 0.2 mm to 0.9 mm.

By adopting the above technical solution, the risk of the second connection layer member being burned through is effectively reduced.

In some embodiments of the present application, the second connection layer member includes a third layer body and a fourth layer body arranged in a stacked manner, where the fourth layer body is disposed on one side of the third layer body facing the first plate body, the fourth layer body has the second plate surface, and the fourth layer body has a lower melting point than the third layer body.

By adopting the above technical solution, the second connection layer member can better adapt to the welding temperature, thereby effectively improving the welding effect between the first plate body and the second plate body.

In some embodiments of the present application, the third layer body is a 3-series aluminum layer body or a 1-series aluminum layer body, and the fourth layer body is a 4-series aluminum layer body.

By adopting the above technical solution, the second connection layer member can better adapt to the welding temperature, thereby further improving the welding effect between the first plate body and the second plate body.

In some embodiments of the present application, the third layer body has a thickness of 0.1 mm to 0.85 mm.

By adopting the above technical solution, the risk of the second connection layer member being burned through is effectively reduced.

In some embodiments of the present application, the fourth layer body has a thickness of 0.05 mm to 0.1 mm.

By adopting the above technical solution, the penetration depth requirement for welding the first plate body and the second plate body can be met, thereby effectively improving the welding effect between the first plate body and the second plate body.

In some embodiments of the present application, the second plate body further includes a second reinforcement layer member, where the second reinforcement layer member is stacked on one side of the second connection layer member facing away from the first plate body, and at least part of the projection of the heat exchange flow channel on the reference plane overlaps with the projection of the second reinforcement layer member on the reference plane.

By adopting the above technical solution, the structural strength of the heat exchange assembly is further improved, thereby further reducing the risk of deformation of the heat exchange assembly.

In some embodiments of the present application, the second plate body further includes a second reinforcement layer member, where the second reinforcement layer member has the second plate surface, and at least part of the projection of the heat exchange flow channel on the reference plane overlaps with the projection of the second reinforcement layer member on the reference plane.

By adopting the above technical solution, the second reinforcement layer member may constitute the entire second plate body, which not only effectively improves the structural strength of the heat exchange assembly, but also effectively simplifies the structure of the heat exchange assembly.

In some embodiments of the present application, the second reinforcement layer member includes at least one of a stainless steel layer member, a carbon steel layer member, a 5-series aluminum layer member, a 6-series aluminum layer member, and a 7-series aluminum layer member.

By adopting the above technical solution, the heat exchange assembly can meet the requirements of yield strength and tensile strength, thereby further reducing the risk of deformation of the heat exchange assembly.

In some embodiments of the present application, the second reinforcement layer member has a thickness of 0.1 mm to 0.8 mm.

By adopting the above technical solution, the weight and size of the heat exchange assembly can be optimized in a case where the heat exchange assembly meets the strength requirement, thereby effectively improving the energy density of the battery using the above heat exchange assembly.

In some embodiments of the present application, the first reinforcement layer member includes at least one of a stainless steel layer member, a carbon steel layer member, a 5-series aluminum layer member, a 6-series aluminum layer member, and a 7-series aluminum layer member.

By adopting the above technical solution, the heat exchange assembly can meet the requirements of yield strength and tensile strength, thereby further reducing the risk of deformation of the heat exchange assembly.

In some embodiments of the present application, the first reinforcement layer member has a thickness of 0.1 mm to 0.8 mm.

By adopting the above technical solution, the weight and size of the heat exchange assembly can be optimized in a case where the heat exchange assembly meets the strength requirement, thereby effectively improving the energy density of the battery using the above heat exchange assembly.

In some embodiments of the present application, a first anti-corrosion layer is provided on the first plate surface; and/or a second anti-corrosion layer is provided on the second plate surface.

By adopting the above technical solution, the risk of the first plate body and the second plate body being in contact with the heat exchange medium is effectively reduced, thereby effectively alleviating corrosion of the first plate body and the second plate body by the heat exchange medium.

In some embodiments of the present application, a first heat-resistant layer is provided on the first plate surface; and/or a second heat-resistant layer is provided on the second plate surface.

By adopting the above technical solution, in a case where the first plate body is welded to the second plate body, heat can be blocked from being transferred from the first plate surface to each layer structure of the first plate body and from the second plate surface to each layer structure of the second plate body, thereby effectively alleviating thermal expansion of the first plate body and the second plate body, and effectively reducing the risk of delamination between the first plate body and the second plate body.

In some embodiments in the present application, the heat exchange flow channel has a depth of 3 mm to 3.5 mm.

By adopting the above technical solution, the risk of cracking of the heat exchange assembly during formation of the heat exchange flow channel is effectively reduced.

In some embodiments in the present application, the heat exchange flow channel has a width of 3 mm to 5 mm.

By adopting the above technical solution, the risk of cracking of the heat exchange assembly during formation of the heat exchange flow channel is effectively reduced.

In some embodiments of the present application, a wall body of the heat exchange flow channel has a corner portion, and the corner portion is in a rounded corner structure.

By adopting the above technical solution, the stress borne by the heat exchange assembly during formation of the heat exchange flow channel is effectively reduced, thereby effectively reducing the risk of cracking of the heat exchange assembly.

In some embodiments in the present application, the rounded corner structure has a radius of 2 mm to 8 mm.

By adopting the above technical solution, the risk of cracking of the heat exchange assembly during formation of the heat exchange flow channel is further reduced.

The embodiments of the present application further provide a box body, including a frame and the heat exchange assembly according to any one of the above embodiments, where the frame is connected to the heat exchange assembly to define an accommodating space for accommodating a battery cell.

The box body according to the embodiment of the present application has the following beneficial effects: The box body according to the embodiment of the present application is effectively improved in structural strength due to the use of the heat exchange assembly according to any one of the above embodiments.

In some embodiments of the present application, the first reinforcement layer member is welded to the frame, and the first reinforcement layer member is made of the same material as the frame.

By adopting the above technical solution, the connection strength between the heat exchange assembly and the frame is effectively improved.

In some embodiments of the present application, at least part of the first reinforcement layer member extends beyond a side of the second plate body to form a welding portion, and one side of the welding portion facing the second plate body is welded to the frame.

By adopting the above technical solution, the heat exchange assembly can be conveniently connected to the frame.

The embodiments of the present application further provide a battery, including a battery cell and the box body according to any one of the above embodiments, where the battery cell is accommodated in the accommodating space, and the heat exchange assembly is configured to regulate the temperature of the battery cell.

The battery according to the embodiment of the present application has the following beneficial effects: The battery according to the embodiment of the present application is effectively improved in structural strength due to the use of the box body according to any one of the above embodiments.

The embodiments of the present application further provide an electrical device, including the above battery.

The electrical device according to the embodiment of the present application has the following beneficial effects: The electrical device according to the embodiment of the present application is effectively improved in structural strength due to the use of the above battery.

### BRIEF DESCRIPTION OF THE DRAWINGS

To describe technical solutions in embodiments of the present application more clearly, the following briefly describes the accompanying drawings for describing the embodiments or the exemplary technology. It is clear that the accompanying drawings described in the following are merely some embodiments of the present application. Those of ordinary skill in the art can still derive other accompanying drawings from these accompanying drawings without creative efforts.
FIG. 1 is a schematic structural diagram of a vehicle according to an embodiment of the present application;
FIG. 2 is a schematic exploded view of a battery according to an embodiment of the present application;
FIG. 3 is a schematic exploded view of a heat exchange assembly according to an embodiment of the present application;
FIG. 4 is a schematic structural diagram of a first plate body according to one embodiment of the present application;
FIG. 5 is a schematic exploded view of a first plate body according to another embodiment of the present application;
FIG. 6 is a schematic exploded view of a first plate body according to yet another embodiment of the present application;
FIG. 7 is a schematic top view of a first plate body according to an embodiment of the present application;
FIG. 8 is a schematic cross-sectional view of the first plate body shown in FIG. 7 along the line A-A;
FIG. 9 is a schematic enlarged view of portion B of the first plate body shown in FIG. 8;
FIG. 10 is a schematic structural diagram of a second plate body according to one embodiment of the present application;
FIG. 11 is a schematic exploded view of a second plate body according to another embodiment of the present application;
FIG. 12 is a schematic exploded view of a second plate body according to yet another embodiment of the present application;
FIG. 13 is a schematic top view of a heat exchange assembly according to an embodiment of the present application; and
FIG. 14 is a schematic cross-sectional view of the heat exchange assembly shown in FIG. 13 along the line C-C.

Description of reference signs:
1000: vehicle;
100: battery;
10: box body; 11: first portion; 12: second portion; 13: heat exchange assembly; 131: first plate body; 1311: first plate surface; 1312: first reinforcement layer member; 13121: welding portion; 1313: first connection layer member; 13131: first layer body; 13132: second layer body; 132: second plate body; 1321: second plate surface; 1322: second reinforcement layer member; 1323: second connection layer member; 13231: third layer body; 13232: fourth layer body; 133: heat exchange flow channel; 1331: corner portion;
20: battery cell;
200: controller; and
300: motor.

### DETAILED DESCRIPTION OF PREFERRED EMBODIMENTS

In order to make the objects, technical solutions and advantages of the present application clearer, the present application will be further described in detail below with reference to the drawings and embodiments. It should be understood that the specific embodiments described herein are only for explaining the present application and are not intended to limit the present application.

As noted, when a component is referred to as being "fixed on" or "disposed on" another component, it may be directly or indirectly on another component. When a component is referred to as being "connected to" another component, it can be directly or indirectly connected to another component. The orientation or positional relationship indicated by the terms such as "upper", "lower", "left", and "right" is based on the orientation or positional relationship shown in the drawings, only to facilitate the description, rather than to indicate or imply that the referred device or element must have a specific orientation and be constructed and operated in a specific orientation, and therefore cannot be understood as a limitation to the present application. And those skilled in the art can understand the meanings of the terms above according to specific conditions. The terms "first" and "second" are only used for facilitating descriptive purposes, and should not be construed as indicating or implying relative importance or implicitly indicating the number of technical features. The meaning of "a plurality of" is two or more, unless otherwise specifically defined.

In the embodiments of the present application, the same reference numerals denote the same component, and a detailed description of the same component is omitted in different embodiments for the sake of brevity. It should be understood that the sizes of various components, such as thickness and length, in the embodiments of the present application shown in the drawings are merely illustrative and should not be construed as limiting the present application.

A battery mentioned in the embodiments of the present application refers to a single physical module including one or a plurality of battery cells to provide a higher voltage and capacity. The battery generally includes a box body for encapsulating one or more battery cells. The box body can prevent liquids or other foreign objects from affecting the charging or discharging of the battery cells to a certain extent.

In the related art, the box body usually includes a heat exchange assembly, where the heat exchange assembly is in contact with the battery cell to absorb heat generated by the battery cell or transfer heat to the battery cell, thereby regulating the temperature of the battery cell. The heat exchange assembly usually includes two plate bodies, where at least one plate body is provided with a heat exchange flow channel for circulating a heat exchange medium. The heat exchange flow channel is usually formed on the plate body by a stamping process, which leads to a reduction in the structural strength of the portion of the plate body provided with the heat exchange flow channel. As a result, the plate body is prone to deformation when subjected to an external force.

To reduce the risk of deformation of the heat exchange assembly, in the heat exchange assembly according to the embodiment of the present application, the first reinforcement layer member is disposed on the first plate body. Since at least part of the projection of the heat exchange flow channel on the reference plane overlaps with the projection of the first reinforcement layer member on the reference plane, the first reinforcement layer member can cover at least part of the heat exchange flow channel, such that at least the structural strength of the portion of the heat exchange assembly provided with the heat exchange flow channel can be improved, thereby effectively reducing the risk of deformation of the heat exchange assembly.

The technical solutions described in the embodiments of the present application may be applicable to batteries and electrical devices using the same, and may also be applicable to other apparatuses requiring temperature regulation, such as fuel engines, gas stoves, and boilers. The electrical device may be, but is not limited to, a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft includes aircraft, rockets, space shuttles, spaceships, and the like. The electric toy includes stationary or mobile electric toys, such as game machines, electric car toys, electric ship toys, and electric airplane toys. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

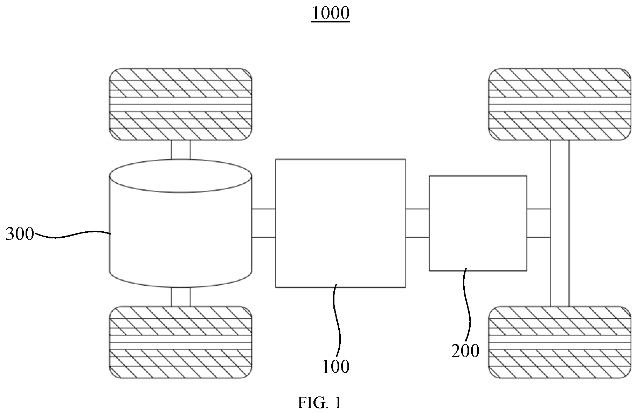

Reference is made to FIG. 1. FIG. 1 is a schematic structural diagram of a vehicle 1000 according to an embodiment of the present application. The vehicle 1000 may be a fuel vehicle, a gas vehicle, or a new energy vehicle, and the new energy vehicle may be a battery electric vehicle, a hybrid vehicle, or a range-extended electric vehicle. A battery 100 is disposed inside the vehicle 1000. The battery 100 may be disposed at the bottom, head, or tail of the vehicle 1000. The battery 100 may be configured to power the vehicle 1000. For example, the battery 100 may serve as an operating power source of the vehicle 1000. The vehicle 1000 may further include a controller 200 and a motor 300, where the controller 200 is configured to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

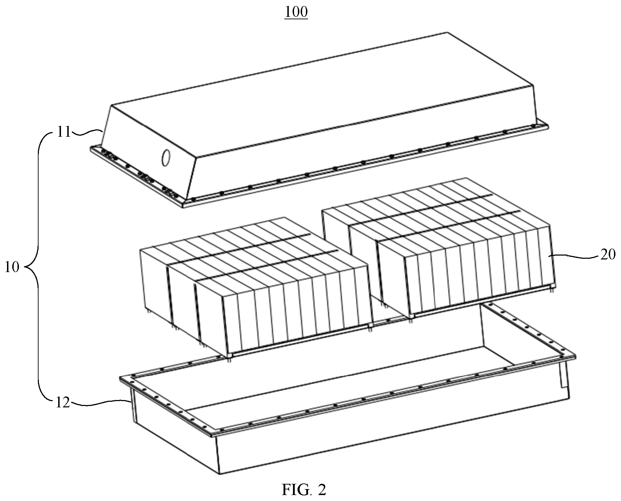

Reference is made to FIG. 2. FIG. 2 is a schematic exploded view of a battery 100 according to an embodiment of the present application. The battery 100 includes a box body 10 and a battery cell 20, where the battery cell 20 is accommodated in the box body 10. The box body 10 is configured to provide an accommodating space for the battery cell 20, and the box body 10 may have various structures. In some embodiments, the box body 10 may include a first portion 11 and a second portion 12, where the first portion 11 and the second portion 12 fit to each other to define an accommodating space for accommodating the battery cell 20. The second portion 12 may be of a hollow structure with an opening at one end, the first portion 11 may be of a plate-shaped structure, and the first portion 11 covers an opening side of the second portion 12, such that the first portion 11 and the second portion 12 jointly define the accommodating space. The first portion 11 and the second portion 12 may each be of a hollow structure with an opening on one side, and the opening side of the first portion 11 covers the opening side of the second portion 12. Certainly, the box body 10 formed by the first portion 11 and the second portion 12 may be in various shapes such as a cylinder and a cuboid.

In some embodiments, the box body 10 may include a frame and a heat exchange assembly 13, where the frame is configured to define the above accommodating space, the heat exchange assembly 13 is in a plate-shaped structure, and the heat exchange assembly 13 covers a frame opening of the frame and is connected to the frame to form the first portion 11 or the second portion 12. The heat exchange assembly 13 is in contact with the battery cell 20 to absorb heat generated by the battery cell 20 or transfer heat to the battery cell 20, thereby regulating the temperature of the battery cell 20.

In some embodiments, the box body 10 may be used as a part of a chassis structure of the vehicle 1000. For example, a part of the box body 10 may be at least a part of a floor of the vehicle 1000, or a part of the box body 10 may be at least a part of a cross beam and a longitudinal beam of the vehicle 1000.

If a plurality of battery cells 20 are provided in the battery 100, the plurality of battery cells 20 may be subjected to series connection, parallel connection, or series-parallel connection, where the series-parallel connection means that the plurality of battery cells 20 are subjected to both series connection and parallel connection. The plurality of battery cells 20 may be directly connected in series, in parallel, or in a series-parallel combination, and the whole of the plurality of battery cells 20 is then accommodated in the box body 10. Certainly, the battery 100 may also be formed in a manner that a plurality of battery cells 20 are first subjected to series connection, parallel connection, or series-parallel connection to form battery modules, and the plurality of battery modules are then subjected to series connection, parallel connection, or series-parallel connection to form an integrated unit, which is accommodated in the box body 10. The battery 100 may further include other structures. For example, the battery 100 may further include a busbar component for implementing an electrical connection between the plurality of battery cells 20.

Each battery cell 20 may be a secondary battery or a primary battery, where the secondary battery refers to a battery cell 20 that may be continuously used by activating an active material by means of charging the battery cell after the battery cell 20 is discharged, and the primary battery refers to a battery cell 20 that may not be continuously used by activating an active material by means of charging the battery cell after the electric energy of the battery cell 20 is depleted. The battery cell 20 may also be a lithium-ion battery, a sodium-ion battery, a sodium-lithium ion battery, a lithium metal battery, a sodium metal battery, a lithium-sulfur battery, a magnesium-ion battery, a nickel-hydrogen battery, a nickel-cadmium battery, a lead storage battery, or the like, but is not limited thereto. The battery cell 20 may be a cylindrical battery cell, a prismatic battery cell, a pouch battery cell, or a battery cell 20 of other shapes, where the prismatic battery cell includes a square-housing battery cell, a blade-shaped battery cell, and a multi-prism battery cell, such as a hexagonal prism battery cell, which is not particularly limited in the present application.

The battery cell 20 in the embodiment of the present application includes an electrode assembly and a housing, where the electrode assembly is mounted in the housing to be protected by the housing.

The electrode assembly is also referred to as a cell and consists of a positive electrode sheet, a negative electrode sheet, and a separator. Working of the electrode assembly mainly relies on migration of metal ions between the positive electrode sheet and the negative electrode sheet. The positive electrode sheet includes a positive electrode current collector and a positive electrode active material layer, where the positive electrode active material layer is coated on the surface of the positive electrode current collector, the portion of the positive electrode current collector not coated with the positive electrode active material layer protrudes from the portion of the positive electrode current collector coated with the positive electrode active material layer, and the portion of the positive electrode current collector not coated with the positive electrode active material layer serves as a positive electrode tab, or a metal conductor is welded to and led out from the positive electrode current collector to serve as the positive electrode tab. Taking a lithium-ion battery as an example, the positive electrode current collector may be made of aluminum, and the positive electrode active material may be, but is not limited to, lithium cobalt oxide, lithium iron phosphate, ternary lithium, lithium manganese oxide, or the like.

The negative electrode sheet includes a negative electrode current collector and a negative electrode active material layer, where the negative electrode active material layer is coated on the surface of the negative electrode current collector, the portion of the negative electrode current collector not coated with the negative electrode active material layer protrudes from the portion of the negative electrode current collector coated with the negative electrode active material layer, and the portion of the negative electrode current collector not coated with the negative electrode active material layer serves as a negative electrode tab, or a metal conductor is welded to and led out from the negative electrode current collector to serve as the negative electrode tab. The negative electrode current collector may be made of copper, and the negative electrode active material may be, but is not limited to, carbon, silicon, or the like.

To ensure, to a certain extent, that a large current can be passed without fusing, a plurality of positive electrode tabs are provided and stacked together, and a plurality of negative electrode tabs are provided and stacked together.

The electrode assembly may be of a wound structure or a stacked structure. The embodiments of the present application are not limited thereto. For the wound structure, the tabs are usually welded to the current collectors, then the positive electrode sheet, the separator, the negative electrode sheet, and the separator are arranged in sequence, and a cylindrical or prismatic cell is formed by winding. For the stacked structure, the tabs are usually led out from the current collectors, and the positive electrode sheet, the separator, the negative electrode sheet, and the separator are arranged in sequence and stacked together layer by layer to form a stacked cell. The separator may be cut into separator sheets for direct stacking, or the separator may be uncut and stacked in a Z-fold manner. The separator may be made of a material including, but not limited to, PP (Polypropylene), PF (Polyethylene), and the like. The separator is an insulating film provided between the positive electrode sheet and the negative electrode sheet, and has main functions of separating the positive electrode sheet from the negative electrode sheet and preventing electrons in the battery cell 20 from freely passing therethrough to prevent a short circuit to a certain extent, but allowing ions in an electrolyte to freely pass between the positive electrode sheet and the negative electrode sheet to form a circuit between the positive electrode sheet and the negative electrode sheet. The positive electrode sheet and the negative electrode sheet are collectively referred to as electrode sheets. The positive electrode tab and the negative electrode tab are collectively referred to as tabs.

The housing refers to a shell structure having a space therein to accommodate and protect the electrode assembly. The housing may be made of a material having specific hardness and strength, such that the housing is not likely to deform when subjected to compression and impact, enabling the battery cell 20 to have higher structural strength and improved reliability. The housing may be made of a material including, but not limited to, copper, iron, aluminum, stainless steel, an aluminum alloy, plastic, and the like.

An electrode terminal is disposed on the housing of the battery cell 20. The electrode terminal refers to a conductive member disposed on the housing, and the electrode terminal is connected to the tab of the electrode assembly to output electric energy of the battery cell 20 or charge the battery cell 20. The battery cell 20 generally has two electrode terminals respectively connected to the positive electrode tab and the negative electrode tab of the electrode assembly, where the electrode terminal connected to the positive electrode tab is a positive electrode terminal, and the electrode terminal connected to the negative electrode tab is a negative electrode terminal.

In some embodiments, the battery cell 20 further includes a pressure relief mechanism, where the pressure relief mechanism is disposed on the housing of the battery cell 20, such that when the temperature or pressure of the battery cell 20 exceeds a safety threshold, gas or liquid inside the battery cell 20 can be released to reduce the pressure inside the battery cell 20 and lower the risk of explosion of the battery cell 20.

To illustrate the technical solutions provided by the present application, a detailed description is provided below with reference to the specific accompanying drawings and embodiments.

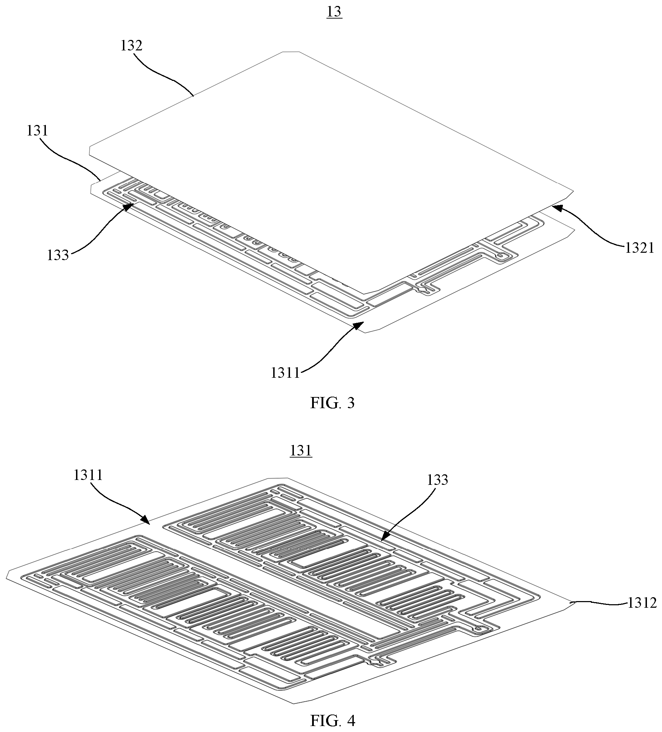

In a first aspect, referring to FIG. 3 to FIG. 6 together, an embodiment of the present application provides a heat exchange assembly 13, including a first plate body 131 and a second plate body 132. The first plate body 131 has a first plate surface 1311, and the first plate body 131 includes a first reinforcement layer member 1312. The second plate body 132 and the first plate body 131 are arranged in a stacked manner, and the second plate body 132 has a second plate surface 1321. A heat exchange flow channel 133 is provided on the first plate surface 1311 and/or the second plate surface 1321, the first plate surface 1311 is hermetically connected to the second plate surface 1321 to enclose the heat exchange flow channel 133, and at least part of the projection of the heat exchange flow channel 133 on a reference plane overlaps with the projection of the first reinforcement layer member 1312 on the reference plane, where the reference plane is perpendicular to the stacking direction of the first plate body 131 and the second plate body 132.

The first plate body 131 and the second plate body 132 are two main parts of the heat exchange assembly 13, and the first plate body 131 and the second plate body 132 are arranged in a stacked manner and connected to each other, such that the first plate body 131 and the second plate body 132 jointly define a circulation space for circulating the heat exchange medium.

The first plate surface 1311 is a surface of the first plate body 131 facing the second plate body 132, the second plate surface 1321 is a surface of the second plate body 132 facing the first plate body 131, and at least one of the first plate surface 1311 and the second plate surface 1321 is provided with the heat exchange flow channel 133.

In some embodiments, a heat exchange flow channel 133 is recessed on the first plate surface 1311, the second plate surface 1321 is a flat surface, and the first plate surface 1311 and the second plate surface 1321 are hermetically connected to enclose the heat exchange flow channel 133 so as to form the above circulation space.

In some other embodiments, the first plate surface 1311 is a flat surface, a heat exchange flow channel 133 is recessed on the second plate surface 1321, and the first plate surface 1311 and the second plate surface 1321 are hermetically connected to enclose the heat exchange flow channel 133 so as to form the above circulation space.

In yet some embodiments, heat exchange flow channels 133 are recessed on both the first plate surface 1311 and the second plate surface 1321, and the first plate surface 1311 and the second plate surface 1321 are hermetically connected to enclose the heat exchange flow channel 133 on the first plate surface 1311 and the heat exchange flow channel 133 on the second plate surface 1321 so as to form the above circulation space, where the heat exchange flow channel 133 on the first plate surface 1311 constitutes one part of the above circulation space, and the heat exchange flow channel 133 on the second plate surface 1321 constitutes the other part of the above circulation space.

It should be noted that the first plate surface 1311 and the second plate surface 1321 may be hermetically connected by, but not limited to, welding or bonding.

In some embodiments, the heat exchange flow channel 133 is formed on the first plate surface 1311 and/or the second plate surface 1321 by stamping, and the first plate surface 1311 and the second plate surface 1321 are welded to enclose the heat exchange flow channel 133.

In some embodiments, the heat exchange flow channel 133 is formed on the first plate surface 1311 and/or the second plate surface 1321 by stamping, and the first plate surface 1311 and the second plate surface 1321 are bonded to enclose the heat exchange flow channel 133.

In yet some embodiments, the first plate body 131 and the second plate body 132 are integrally connected by a rolling process, and the heat exchange flow channel 133 is formed between the first plate body 131 and the second plate body 132 by an inflation process.

The first reinforcement layer member 1312 may be a part of a layer structure of the first plate body 131, or may be the entire first plate body 131. It can be understood that the first reinforcement layer member 1312 is made of high-strength metal. The high-strength metal may be, but is not limited to, stainless steel, carbon steel, 5-series aluminum, 6-series aluminum, 7-series aluminum, or the like. Compared with the heat exchange assembly 13 made of conventional metal such as 1-series aluminum or 3-series aluminum, the first reinforcement layer member 1312 has higher structural strength, where the structural strength includes, but is not limited to, yield strength, tensile strength, and the like. For example, the yield strength of the first reinforcement layer member 1312 is greater than 54 MPa, and the tensile strength of the first reinforcement layer member 1312 is greater than 95 MPa.

On the reference plane perpendicular to the stacking direction of the first plate body 131 and the second plate body 132, at least part of the projection of the heat exchange flow channel 133 overlaps with the projection of the first reinforcement layer member 1312. In other words, in the stacking direction of the first plate body 131 and the second plate body 132, at least part of the heat exchange flow channel 133 is disposed opposite to the first reinforcement layer member 1312. In some embodiments, on the reference plane perpendicular to the stacking direction of the first plate body 131 and the second plate body 132, the entire projection of the heat exchange flow channel 133 overlaps with the projection of the first reinforcement layer member 1312. In a case where the portion of the heat exchange flow channel 133 opposite to the first reinforcement layer member 1312 is subjected to an external force, the first reinforcement layer member 1312 may provide a supporting force to the portion of the heat exchange flow channel 133 opposite to the first reinforcement layer member 1312 to resist the external force, thereby reducing the risk of deformation of the heat exchange flow channel 133.

In the heat exchange assembly 13 according to the embodiment of the present application, the first reinforcement layer member 1312 is disposed on the first plate body 131. Since at least part of the projection of the heat exchange flow channel 133 on the reference plane overlaps with the projection of the first reinforcement layer member 1312 on the reference plane, the first reinforcement layer member 1312 can cover at least part of the heat exchange flow channel 133, such that at least the structural strength of the portion of the heat exchange assembly 13 provided with the heat exchange flow channel 133 can be improved, thereby effectively reducing the risk of deformation of the heat exchange assembly 13.

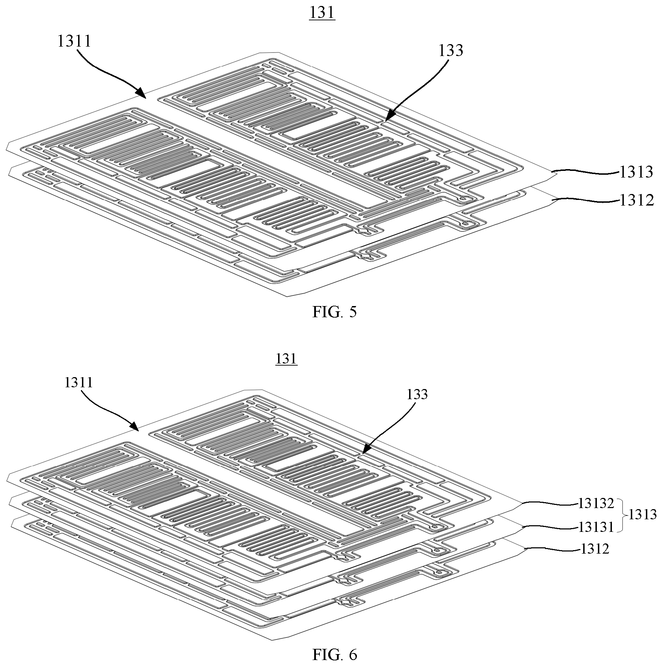

In some embodiments of the present application, referring to FIG. 5, the first plate body 131 further includes a first connection layer member 1313 stacked on one side of the first reinforcement layer member 1312 facing the second plate body 132, where the first connection layer member 1313 has the first plate surface 1311.

The first connection layer member 1313 has the first plate surface 1311. In other words, the first connection layer member 1313 is an inner layer structure of the first plate body 131, the first connection layer member 1313 is configured to be connected to the second plate body 132, while the first reinforcement layer member 1312 may serve as an outer layer structure of the first plate body 131. In some embodiments, the first connection layer member 1313 and the first reinforcement layer member 1312 are stacked and then bonded by the rolling process to form the first plate body 131. Certainly, the first connection layer member 1313 and the first reinforcement layer member 1312 may also be connected by welding, bonding, or the like to form the first plate body 131. It can be understood that the first connection layer member 1313 is made of metal. The structural strength of the first connection layer member 1313 may be lower than that of the first reinforcement layer member 1312. In other words, the strength of the metal used to make the first connection layer member 1313 is lower than that of the metal used to make the first reinforcement layer member 1312. In some embodiments, the first connection layer member 1313 may be an integral member, that is, the first connection layer member 1313 is made of a metal. In some other embodiments, the first connection layer member 1313 may include a plurality of layer structures, where the layer structures may be made of the same or different materials. The first connection layer member 1313 may be, but is not limited to, a 1-series aluminum layer member, a 3-series aluminum layer member, a 4-series aluminum layer member, or the like.

By adopting the above technical solution, the first plate body 131 and the second plate body 132 can be conveniently connected.

In some embodiments of the present application, the first connection layer member 1313 is welded to the second plate body 132.

During welding, to better enclose the heat exchange flow channel 133, the first connection layer member 1313 and the second plate body 132 may be welded along the edge of the first plate body 131, and the first connection layer member 1313 and the second plate body 132 may be welded along the edge of the heat exchange flow channel 133. The welding between the first connection layer member 1313 and the second plate body 132 may be, but is not limited to, furnace brazing, laser welding, arc welding, or the like.

By adopting the above technical solution, the connection process between the first plate body 131 and the second plate body 132 is effectively simplified, thereby effectively improving the production efficiency of the heat exchange assembly 13.

In some embodiments of the present application, the first connection layer member 1313 is an aluminum layer member.

In other words, the first connection layer member 1313 is made of aluminum. Compared with high-strength metal as steel, the aluminum has a lower melting point and can better adapt to the welding temperature.

In some embodiments, the first connection layer member 1313 and the second plate body 132 are welded by a furnace brazing process.

By adopting the above technical solution, the first connection layer member 1313 can better adapt to the welding temperature of the furnace brazing process, thereby effectively improving the welding effect between the first plate body 131 and the second plate body 132.

In some embodiments of the present application, the first connection layer member 1313 includes at least one of a 1-series aluminum layer member, a 3-series aluminum layer member, and a 4-series aluminum layer member.

In other words, the first connection layer member 1313 is made of at least one of 1-series aluminum, 3-series aluminum, and 4-series aluminum. In this embodiment, the first connection layer member 1313 is an integral member, that is, the first connection layer member 1313 is entirely made of at least one of 1-series aluminum, 3-series aluminum, and 4-series aluminum.

By adopting the above technical solution, the first connection layer member 1313 can better adapt to the welding temperature, thereby further improving the welding effect between the first plate body 131 and the second plate body 132.

In some embodiments of the present application, the first connection layer member 1313 has a thickness of 0.2 mm to 0.9 mm.

The thickness of the first connection layer member 1313 refers to the dimension of the first connection layer member 1313 in the stacking direction of the first plate body 131 and the second plate body 132, and the thicknesses of various portions of the first connection layer member 1313 may be the same or different. It should be noted that in a case where the first connection layer member 1313 has at least two portions with different thicknesses, the thicknesses of various portions of the first connection layer member 1313 are all within a range of 0.2 mm to 0.9 mm.

In a case where the first connection layer member 1313 is entirely made of at least one of 1-series aluminum, 3-series aluminum, and 4-series aluminum, the thickness of the first connection layer member 1313 is 0.2 mm to 0.9 mm, that is, the minimum thickness of the first connection layer member 1313 is 0.2 mm, so as to reduce the risk of the first connection layer member 1313 being burned through during welding. The thickness of the first connection layer member 1313 may be determined according to actual application requirements, and may specifically be 0.2 mm, 0.3 mm, 0.4 mm, 0.5 mm, 0.6 mm, 0.7 mm, 0.8 mm, 0.9 mm, or the like.

By adopting the above technical solution, the risk of the first connection layer member 1313 being burned through is effectively reduced, thereby effectively reducing the risk of contact between the first reinforcement layer member 1312 and the heat exchange medium, and effectively alleviating corrosion of the first reinforcement layer member 1312.

Certainly, on the other hand, in a case where the first connection layer member 1313 is entirely made of at least one of 1-series aluminum, 3-series aluminum, and 4-series aluminum, the maximum thickness of the first connection layer member 1313 is limited to 0.9 mm, such that the heat exchange assembly 13 does not greatly increase in weight and size due to the excessive thickness of the first connection layer member 1313, thereby effectively improving the energy density of the battery 100 using the above heat exchange assembly 13.

In some embodiments of the present application, referring to FIG. 6, the first connection layer member 1313 includes a first layer body 13131 and a second layer body 13132, where the first layer body 13131 is stacked between the first reinforcement layer member 1312 and the second layer body 13132, the second layer body 13132 has the first plate surface 1311, and the second layer body 13132 has a lower melting point than the first layer body 13131.

In other words, in this embodiment, the first connection layer member 1313 is formed by stacking at least two layer structures. The first layer body 13131 may serve as a base layer structure of the first connection layer member 1313, and the second layer body 13132 may serve as a connection layer structure for being connected to the second plate body 132.

In a case where the first connection layer member 1313 is welded to the second plate body 132, since the melting point of the second layer body 13132 is lower than that of the first layer body 13131, the second layer body 13132 is easier to melt than the first layer body 13131, such that the first connection layer member 1313 can better adapt to the welding temperature, thereby effectively improving the welding effect between the first plate body 131 and the second plate body 132.

In some embodiments of the present application, the first layer body 13131 is a 3-series aluminum layer body or a 1-series aluminum layer body, and the second layer body 13132 is a 4-series aluminum layer body.

By adopting the above technical solution, the first connection layer member 1313 can better adapt to the welding temperature, thereby further improving the welding effect between the first plate body 131 and the second plate body 132.

In some embodiments of the present application, the first layer body 13131 has a thickness of 0.1 mm to 0.85 mm.

The thickness of the first layer body 13131 refers to the dimension of the first layer body 13131 in the stacking direction of the first plate body 131 and the second plate body 132, and the thicknesses of various portions of the first layer body 13131 may be the same or different. It should be noted that in a case where the first layer body 13131 has at least two portions with different thicknesses, the thicknesses of various portions of the first layer body 13131 are all within a range of 0.1 mm to 0.85 mm.

In a case where the first connection layer member 1313 includes a first layer body 13131 and a second layer body 13132, the first layer body 13131 is a 3-series aluminum layer body or a 1-series aluminum layer body, and the second layer body 13132 is a 4-series aluminum layer body, the thickness of the first layer body 13131 is 0.1 mm to 0.85 mm, that is, the minimum thickness of the first layer body 13131 is 0.1 mm, so as to reduce the risk of the first layer body 13131 being burned through during welding. The thickness of the first layer body 13131 may be determined according to actual application requirements, and may specifically be 0.1 mm, 0.2 mm, 0.3 mm, 0.4 mm, 0.5 mm, 0.6 mm, 0.7 mm, 0.8 mm, 0.85 mm, or the like.

By adopting the above technical solution, the risk of the first connection layer member 1313 being burned through is effectively reduced, thereby effectively reducing the risk of contact between the first reinforcement layer member 1312 and the heat exchange medium, and effectively alleviating corrosion of the first reinforcement layer member 1312.

Certainly, on the other hand, in a case where the first connection layer member 1313 includes a first layer body 13131 and a second layer body 13132, the first layer body 13131 is a 3-series aluminum layer body or a 1-series aluminum layer body, and the second layer body 13132 is a 4-series aluminum layer body, the maximum thickness of the first layer body 13131 is limited to 0.85 mm, such that the heat exchange assembly 13 does not greatly increase in weight and size due to the excessive thickness of the first connection layer member 1313, thereby effectively improving the energy density of the battery 100 using the above heat exchange assembly 13.

In some embodiments of the present application, the second layer body 13132 has a thickness of 0.05 mm to 0.1 mm.

The thickness of the second layer body 13132 refers to the dimension of the second layer body 13132 in the stacking direction of the first plate body 131 and the second plate body 132 before the first connection layer member 1313 and the second plate body 132 are welded, and the thicknesses of various portions of the second layer body 13132 may be the same or different. It should be noted that in a case where the second layer body 13132 has at least two portions with different thicknesses, the thicknesses of various portions of the second layer body 13132 are all within a range of 0.05 mm to 0.1 mm.

In a case where the first connection layer member 1313 includes a first layer body 13131 and a second layer body 13132, the first layer body 13131 is a 3-series aluminum layer body or a 1-series aluminum layer body, and the second layer body 13132 is a 4-series aluminum layer body, the thickness of the second layer body 13132 is 0.05 mm to 0.1 mm, that is, the minimum thickness of the second layer body 13132 is 0.05 mm, such that after the second layer body 13132 is melted, a welding portion 13121 between the first plate body 131 and the second plate body 132 can have a sufficient penetration depth. The thickness of the second layer body 13132 may be determined according to actual application requirements, and may specifically be 0.05 mm, 0.06 mm, 0.07 mm, 0.08 mm, 0.09 mm, 0.1 mm, or the like.

By adopting the above technical solution, the penetration depth requirement for welding the first plate body 131 and the second plate body 132 can be met, thereby effectively improving the welding effect between the first plate body 131 and the second plate body 132.

In some embodiments of the present application, referring to FIG. 4, the first reinforcement layer member 1312 has the first plate surface 1311.

In some embodiments, the first reinforcement layer member 1312 may constitute the entire first plate body 131, which not only effectively improves the structural strength of the heat exchange assembly 13, but also effectively simplifies the structure of the heat exchange assembly 13.

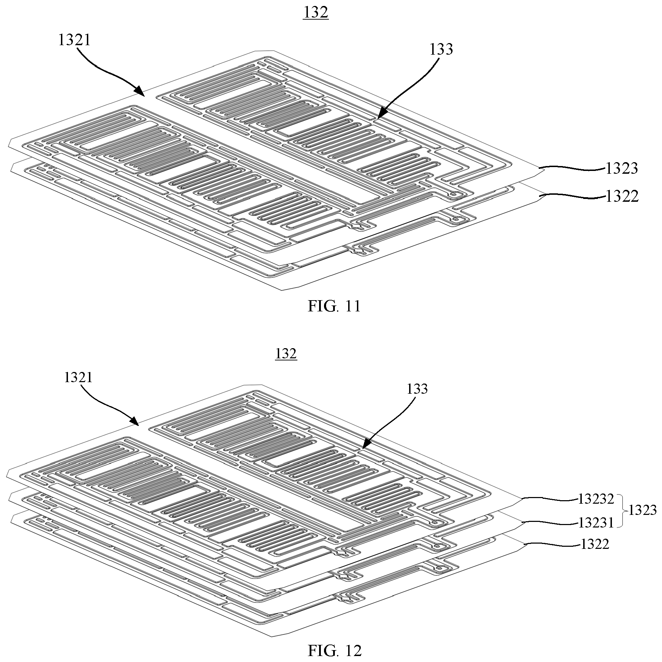

In some embodiments of the present application, referring to FIG. 11, the second plate body 132 includes a second connection layer member 1323, where the second connection layer member 1323 has the second plate surface 1321.

In some embodiments, the second connection layer member 1323 may constitute the entire second plate body 132 and be connected to the first plate body 131.

In some other embodiments, the second plate body 132 further includes other layer structures, where the second connection layer member 1323 may serve as an inner layer structure of the second plate body 132, and the second connection layer member 1323 is configured to be connected to the first plate body 131.

It can be understood that the second connection layer member 1323 is made of metal. The structural strength of the second connection layer member 1323 may be lower than that of the first reinforcement layer member 1312. In other words, the strength of the metal used to make the second connection layer member 1323 is lower than that of the metal used to make the first reinforcement layer member 1312. In some embodiments, the second connection layer member 1323 may be an integral member, that is, the second connection layer member 1323 is made of a metal. In some other embodiments, the second connection layer member 1323 may include a plurality of layer structures, where the layer structures may be made of the same or different materials. The second connection layer member 1323 may be, but is not limited to, a 1-series aluminum layer member, a 3-series aluminum layer member, a 4-series aluminum layer member, or the like.

By adopting the above technical solution, the first plate body 131 and the second plate body 132 can be conveniently connected.

In some embodiments of the present application, the second connection layer member 1323 is welded to the first plate body 131.

By adopting the above technical solution, the connection process between the first plate body 131 and the second plate body 132 is effectively simplified, thereby effectively improving the production efficiency of the heat exchange assembly 13.

In some embodiments of the present application, the second connection layer member 1323 is an aluminum layer member.

In other words, the second connection layer member 1323 is made of aluminum. Compared with high-strength metal as steel, the aluminum has a lower melting point and can better adapt to the welding temperature.

In some embodiments, the second connection layer member 1323 and the first plate body 131 are welded by the furnace brazing process.

By adopting the above technical solution, the second connection layer member 1323 can better adapt to the welding temperature, thereby effectively improving the welding effect between the first plate body 131 and the second plate body 132.

In some embodiments of the present application, the second connection layer member 1323 includes at least one of a 1-series aluminum layer member, a 3-series aluminum layer member, and a 4-series aluminum layer member.

In other words, the second connection layer member 1323 is made of at least one of 1-series aluminum, 3-series aluminum, and 4-series aluminum. In this embodiment, the second connection layer member 1323 is an integral member, that is, the second connection layer member 1323 is entirely made of at least one of 1-series aluminum, 3-series aluminum, and 4-series aluminum.

By adopting the above technical solution, the second connection layer member 1323 can better adapt to the welding temperature, thereby further improving the welding effect between the first plate body 131 and the second plate body 132.

In some embodiments of the present application, the second connection layer member 1323 has a thickness of 0.2 mm to 0.9 mm.

The thickness of the second connection layer member 1323 refers to the dimension of the second connection layer member 1323 in the stacking direction of the first plate body 131 and the second plate body 132, and the thicknesses of various portions of the second connection layer member 1323 may be the same or different. It should be noted that in a case where the second connection layer member 1323 has at least two portions with different thicknesses, the thicknesses of various portions of the second connection layer member 1323 are all within a range of 0.2 mm to 0.9 mm.

In a case where the second connection layer member 1323 is entirely made of at least one of 1-series aluminum, 3-series aluminum, and 4-series aluminum, the thickness of the second connection layer member 1323 is 0.2 mm to 0.9 mm, that is, the minimum thickness of the second connection layer member 1323 is 0.2 mm, so as to reduce the risk of the second connection layer member 1323 being burned through during welding. The thickness of the second connection layer member 1323 may be determined according to actual application requirements, and may specifically be 0.2 mm, 0.3 mm, 0.4 mm, 0.5 mm, 0.6 mm, 0.7 mm, 0.8 mm, 0.9 mm, or the like.

By adopting the above technical solution, the risk of the second connection layer member 1323 being burned through is effectively reduced.

Certainly, on the other hand, in a case where the second connection layer member 1323 is entirely made of at least one of 1-series aluminum, 3-series aluminum, and 4-series aluminum, the maximum thickness of the second connection layer member 1323 is limited to 0.9 mm, such that the heat exchange assembly 13 does not greatly increase in weight and size due to the excessive thickness of the second connection layer member 1323, thereby effectively improving the energy density of the battery 100 using the above heat exchange assembly 13.

In some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 has the first plate surface 1311, the first connection layer member 1313 is an integral member, and the first connection layer member 1313 is a 1-series aluminum layer member or a 3-series aluminum layer member; the second plate body 132 includes a second connection layer member 1323, where the second connection layer member 1323 constitutes the entire second plate body 132, the second connection layer member 1323 has the second plate surface 1321, the second connection layer member 1323 is an integral member, and the second connection layer member 1323 is a 1-series aluminum layer member or a 3-series aluminum layer member; and the first plate surface 1311 is hermetically connected to the second plate surface 1321.

In some other embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 includes a first layer body 13131 and a second layer body 13132, the first layer body 13131 and the second layer body 13132 are arranged in a stacked manner, the first layer body 13131 is a 1-series aluminum layer member or a 3-series aluminum layer member, the second layer body 13132 has the first plate surface 1311, and the second layer body 13132 is a 4-series aluminum layer member; the second plate body 132 includes a second connection layer member 1323, where the second connection layer member 1323 constitutes the entire second plate body 132, the second connection layer member 1323 has the second plate surface 1321, the second connection layer member 1323 is an integral member, and the second connection layer member 1323 is a 1-series aluminum layer member or a 3-series aluminum layer member; and the first plate surface 1311 is hermetically connected to the second plate surface 1321.

In some other embodiments, the first plate body 131 includes a first reinforcement layer member 1312, where the first reinforcement layer member 1312 constitutes the entire first plate body 131, and the first reinforcement layer member 1312 has the first plate surface 1311; the second plate body 132 includes a second connection layer member 1323, where the second connection layer member 1323 constitutes the entire second plate body 132, the second connection layer member 1323 has the second plate surface 1321, the second connection layer member 1323 is an integral member, and the second connection layer member 1323 is a 1-series aluminum layer member or a 3-series aluminum layer member; and the first plate surface 1311 is hermetically connected to the second plate surface 1321.

In some embodiments of the present application, referring to FIG. 12, the second connection layer member 1323 includes a third layer body 13231 and a fourth layer body 13232 arranged in a stacked manner, where the fourth layer body 13232 is disposed on one side of the third layer body 13231 facing the first plate body 131, the fourth layer body 13232 has the second plate surface 1321, and the fourth layer body 13232 has a lower melting point than the third layer body 13231.

In other words, in this embodiment, the second connection layer member 1323 is formed by stacking at least two layer structures. The third layer body 13231 may serve as a base layer structure of the second connection layer member 1323, and the fourth layer body 13232 may serve as a connection layer structure for being connected to the first plate body 131.

In a case where the second connection layer member 1323 is welded to the first plate body 131, since the melting point of the fourth layer body 13232 is lower than that of the third layer body 13231, the fourth layer body 13232 is easier to melt than the third layer body 13231, such that the second connection layer member 1323 can better adapt to the welding temperature, thereby effectively improving the welding effect between the first plate body 131 and the second plate body 132.

In some embodiments of the present application, the third layer body 13231 is a 3-series aluminum layer body or a 1-series aluminum layer body, and the fourth layer body 13232 is a 4-series aluminum layer body.

By adopting the above technical solution, the second connection layer member 1323 can better adapt to the welding temperature, thereby further improving the welding effect between the first plate body 131 and the second plate body 132.

In some embodiments of the present application, the third layer body 13231 has a thickness of 0.1 mm to 0.85 mm.

The thickness of the third layer body 13231 refers to the dimension of the third layer body 13231 in the stacking direction of the first plate body 131 and the second plate body 132, and the thicknesses of various portions of the third layer body 13231 may be the same or different. It should be noted that in a case where the third layer body 13231 has at least two portions with different thicknesses, the thicknesses of various portions of the third layer body 13231 are all within a range of 0.1 mm to 0.85 mm.

In a case where the second connection layer member 1323 includes a third layer body 13231 and a fourth layer body 13232, the third layer body 13231 is a 3-series aluminum layer body or a 1-series aluminum layer body, and the fourth layer body 13232 is a 4-series aluminum layer body, the thickness of the third layer body 13231 is 0.1 mm to 0.85 mm, that is, the minimum thickness of the third layer body 13231 is 0.1 mm, so as to reduce the risk of the third layer body 13231 being burned through during welding. The thickness of the third layer body 13231 may be determined according to actual application requirements, and may specifically be 0.1 mm, 0.2 mm, 0.3 mm, 0.4 mm, 0.5 mm, 0.6 mm, 0.7 mm, 0.8 mm, 0.85 mm, or the like.

By adopting the above technical solution, the risk of the second connection layer member 1323 being burned through is effectively reduced.

Certainly, on the other hand, in a case where the second connection layer member 1323 includes a third layer body 13231 and a fourth layer body 13232, the third layer body 13231 is a 3-series aluminum layer body or a 1-series aluminum layer body, and the fourth layer body 13232 is a 4-series aluminum layer body, the maximum thickness of the third layer body 13231 is limited to 0.85 mm, such that the heat exchange assembly 13 does not greatly increase in weight and size due to the excessive thickness of the second connection layer member 1323, thereby effectively improving the energy density of the battery 100 using the above heat exchange assembly 13.

In some embodiments of the present application, the fourth layer body 13232 has a thickness of 0.05 mm to 0.1 mm.

The thickness of the fourth layer body 13232 refers to the dimension of the fourth layer body 13232 in the stacking direction of the first plate body 131 and the second plate body 132 before the second connection layer member 1323 is welded to the first plate body 131, and the thicknesses of various portions of the fourth layer body 13232 may be the same or different. It should be noted that in a case where the fourth layer body 13232 has at least two portions with different thicknesses, the thicknesses of various portions of the fourth layer body 13232 are all within a range of 0.05 mm to 0.1 mm.

In a case where the second connection layer member 1323 includes a third layer body 13231 and a fourth layer body 13232, the third layer body 13231 is a 3-series aluminum layer body or a 1-series aluminum layer body, and the fourth layer body 13232 is a 4-series aluminum layer body, the thickness of the fourth layer body 13232 is 0.05 mm to 0.1 mm, that is, the minimum thickness of the fourth layer body 13232 is 0.05 mm, such that after the fourth layer body 13232 is melted, the welding portion 13121 between the first plate body 131 and the second plate body 132 can have a sufficient penetration depth. The thickness of the fourth layer body 13232 may be determined according to actual application requirements, and may specifically be 0.05 mm, 0.06 mm, 0.07 mm, 0.08 mm, 0.09 mm, 0.1 mm, or the like.

By adopting the above technical solution, the penetration depth requirement for welding the first plate body 131 and the second plate body 132 can be met, thereby effectively improving the welding effect between the first plate body 131 and the second plate body 132.

In some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 has the first plate surface 1311, the first connection layer member 1313 is an integral member, and the first connection layer member 1313 is a 1-series aluminum layer member or a 3-series aluminum layer member; the second plate body 132 includes a second connection layer member 1323, where the second connection layer member 1323 constitutes the entire second plate body 132; the second connection layer member 1323 includes a third layer body 13231 and a fourth layer body 13232, where the third layer body 13231 and the fourth layer body 13232 are arranged in a stacked manner, the third layer body 13231 is a 1-series aluminum layer member or a 3-series aluminum layer member, the fourth layer body 13232 has the second plate surface 1321, and the fourth layer body 13232 is a 4-series aluminum layer member; and the first plate surface 1311 is hermetically connected to the second plate surface 1321.

In some other embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 includes a first layer body 13131 and a second layer body 13132, the first layer body 13131 and the second layer body 13132 are arranged in a stacked manner, the first layer body 13131 is a 1-series aluminum layer member or a 3-series aluminum layer member, the second layer body 13132 has the first plate surface 1311, and the second layer body 13132 is a 4-series aluminum layer member; the second plate body 132 includes a second connection layer member 1323, where the second connection layer member 1323 constitutes the entire second plate body 132, the second connection layer member 1323 includes a third layer body 13231 and a fourth layer body 13232, the third layer body 13231 and the fourth layer body 13232 are arranged in a stacked manner, the third layer body 13231 is a 1-series aluminum layer member or a 3-series aluminum layer member, the fourth layer body 13232 has the second plate surface 1321, and the fourth layer body 13232 is a 4-series aluminum layer member; and the first plate surface 1311 is hermetically connected to the second plate surface 1321.

In yet some embodiments, the first plate body 131 includes a first reinforcement layer member 1312, where the first reinforcement layer member 1312 constitutes the entire first plate body 131, and the first reinforcement layer member 1312 has the first plate surface 1311; the second plate body 132 includes a second connection layer member 1323, where the second connection layer member 1323 constitutes the entire second plate body 132; the second connection layer member 1323 includes a third layer body 13231 and a fourth layer body 13232, where the third layer body 13231 and the fourth layer body 13232 are arranged in a stacked manner, the third layer body 13231 is a 1-series aluminum layer member or a 3-series aluminum layer member, the fourth layer body 13232 has the second plate surface 1321, and the fourth layer body 13232 is a 4-series aluminum layer member; and the first plate surface 1311 is hermetically connected to the second plate surface 1321.

In some embodiments of the present application, referring to FIG. 11 and FIG. 12 together, the second plate body 132 further includes a second reinforcement layer member 1322, where the second reinforcement layer member 1322 is stacked on one side of the second connection layer member 1323 facing away from the first plate body 131, and at least part of the projection of the heat exchange flow channel 133 on the reference plane overlaps with the projection of the second reinforcement layer member 1322 on the reference plane.

The second reinforcement layer member 1322 is one part of a layer structure of the second plate body 132, and the second connection layer member 1323 is the other part of the layer structure of the second plate body 132. It can be understood that the second reinforcement layer member 1322 is made of high-strength metal. The high-strength metal may be, but is not limited to, stainless steel, carbon steel, 5-series aluminum, 6-series aluminum, 7-series aluminum, or the like. Compared with the second connection layer member 1323, the second reinforcement layer member 1322 has higher structural strength, where the structural strength includes, but is not limited to, yield strength, tensile strength, and the like. For example, the yield strength of the second reinforcement layer member 1322 is greater than 54 MPa, and the tensile strength of the second reinforcement layer member 1322 is greater than 95 MPa.

On the reference plane perpendicular to the stacking direction of the first plate body 131 and the second plate body 132, at least part of the projection of the heat exchange flow channel 133 overlaps with the projection of the second reinforcement layer member 1322. In other words, in the stacking direction of the first plate body 131 and the second plate body 132, at least part of the heat exchange flow channel 133 is disposed opposite to the second reinforcement layer member 1322. In some embodiments, on the reference plane perpendicular to the stacking direction of the first plate body 131 and the second plate body 132, the entire projection of the heat exchange flow channel 133 overlaps with the projection of the second reinforcement layer member 1322. In a case where the portion of the heat exchange flow channel 133 opposite to the second reinforcement layer member 1322 is subjected to an external force, the second reinforcement layer member 1322 may provide a supporting force to the portion of the heat exchange flow channel 133 opposite to the second reinforcement layer member 1322 to resist the external force, thereby reducing the risk of deformation of the heat exchange flow channel 133.

By adopting the above technical solution, the structural strength of the heat exchange assembly 13 is further improved, thereby further reducing the risk of deformation of the heat exchange assembly 13.

In some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 has the first plate surface 1311, the first reinforcement layer member 1313 is an integral member, and the first connection layer member 1313 is a 1-series aluminum layer member or a 3-series aluminum layer member; the second plate body 132 includes a second reinforcement layer member 1322 and a second connection layer member 1323, where the second reinforcement layer member 1322 and the second connection layer member 1323 are arranged in a stacked manner, the second connection layer member 1323 has the second plate surface 1321, the second connection layer member 1323 is an integral member, and the second connection layer member 1323 is a 1-series aluminum layer member or a 3-series aluminum layer member; and the first plate surface 1311 is hermetically connected to the second plate surface 1321.

In some other embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 includes a first layer body 13131 and a second layer body 13132, the first layer body 13131 and the second layer body 13132 are arranged in a stacked manner, the first layer body 13131 is a 1-series aluminum layer member or a 3-series aluminum layer member, the second layer body 13132 has the first plate surface 1311, and the second layer body 13132 is a 4-series aluminum layer member; the second plate body 132 includes a second reinforcement layer member 1322 and a second connection layer member 1323, where the second reinforcement layer member 1322 and the second connection layer member 1323 are arranged in a stacked manner, the second connection layer member 1323 has the second plate surface 1321, the second connection layer member 1323 is an integral member, and the second connection layer member 1323 is a 1-series aluminum layer member or a 3-series aluminum layer member; and the first plate surface 1311 is hermetically connected to the second plate surface 1321.

In yet some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 has the first plate surface 1311, the first connection layer member 1313 is an integral member, and the first connection layer member 1313 is a 1-series aluminum layer member or a 3-series aluminum layer member; the second plate body 132 includes a second reinforcement layer member 1322 and a second connection layer member 1323, where the second connection layer member 1322 and the second connection layer member 1323 are arranged in a stacked manner, the second connection layer member 1323 includes a third layer body 13231 and a fourth layer body 13232, the third layer body 13231 and the fourth layer body 13232 are arranged in a stacked manner, the third layer body 13231 is a 1-series aluminum layer member or a 3-series aluminum layer member, the fourth layer body 13232 has the second plate surface 1321, and the fourth layer body 13232 is a 4-series aluminum layer member; and the first plate surface 1311 is hermetically connected to the second plate surface 1321.

In still some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 includes a first layer body 13131 and a second layer body 13132, the first layer body 13131 and the second layer body 13132 are arranged in a stacked manner, the first layer body 13131 is a 1-series aluminum layer member or a 3-series aluminum layer member, the second layer body 13132 has the first plate surface 1311, and the second layer body 13132 is a 4-series aluminum layer member; the second plate body 132 includes a second reinforcement layer member 1322 and a second connection layer member 1323, where the second reinforcement layer member 1322 and the second connection layer member 1323 are arranged in a stacked manner, the second connection layer member 1323 includes a third layer body 13231 and a fourth layer body 13232, the third layer body 13231 and the fourth layer body 13232 are arranged in a stacked manner, the third layer body 13231 is a 1-series aluminum layer member or a 3-series aluminum layer member, the fourth layer body 13232 has the second plate surface 1321, and the fourth layer body 13232 is a 4-series aluminum layer member; and the first plate surface 1311 is hermetically connected to the second plate surface 1321.

In still some embodiments, the first plate body 131 includes a first reinforcement layer member 1312, where the first reinforcement layer member 1312 constitutes the entire first plate body 131, and the first reinforcement layer member 1312 has the first plate surface 1311; the second plate body 132 includes a second reinforcement layer member 1322 and a second connection layer member 1323, where the second reinforcement layer member 1322 and the second connection layer member 1323 are arranged in a stacked manner, the second connection layer member 1323 has the second plate surface 1321, the second connection layer member 1323 is an integral member, and the second connection layer member 1323 is a 1-series aluminum layer member or a 3-series aluminum layer member; and the first plate surface 1311 is hermetically connected to the second plate surface 1321.

In still some embodiments, the first plate body 131 includes a first reinforcement layer member 1312, where the first reinforcement layer member 1312 constitutes the entire first plate body 131, and the first reinforcement layer member 1312 has the first plate surface 1311; the second plate body 132 includes a second reinforcement layer member 1322 and a second connection layer member 1323, where the second reinforcement layer member 1322 and the second connection layer member 1323 are arranged in a stacked manner, the second connection layer member 1323 includes a third layer body 13231 and a fourth layer body 13232, the third layer body 13231 and the fourth layer body 13232 are arranged in a stacked manner, the third layer body 13231 is a 1-series aluminum layer member or a 3-series aluminum layer member, the fourth layer body 13232 has the second plate surface 1321, and the fourth layer body 13232 is a 4-series aluminum layer member; and the first plate surface 1311 is hermetically connected to the second plate surface 1321.

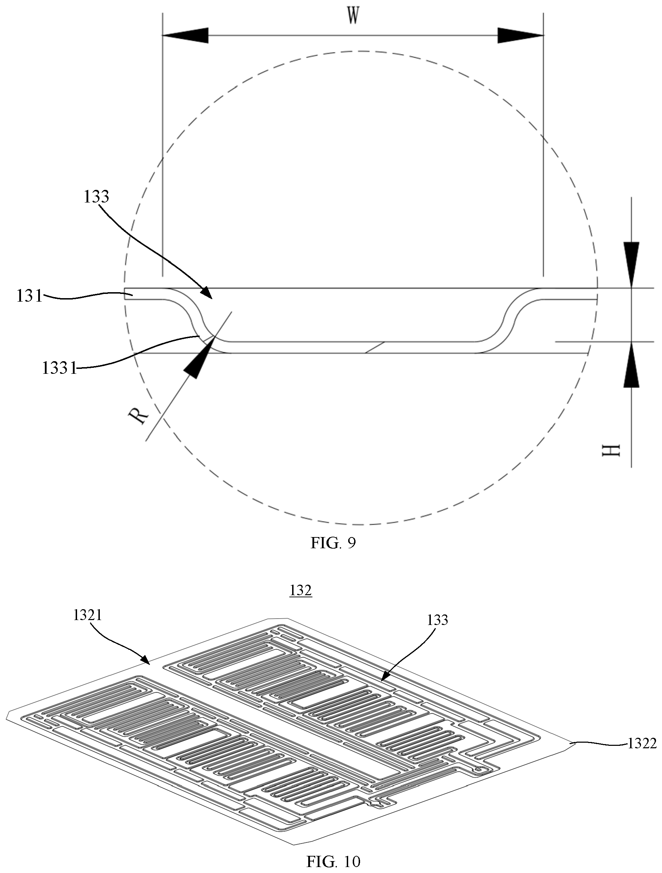

In some embodiments of the present application, referring to FIG. 10, the second plate body 132 further includes a second reinforcement layer member 1322, where the second reinforcement layer member 1322 has the second plate surface 1321, and at least part of the projection of the heat exchange flow channel 133 on the reference plane overlaps with the projection of the second reinforcement layer member 1322 on the reference plane.

In some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 has the first plate surface 1311, the first connection layer member 1313 is an integral member, and the first connection layer member 1313 is a 1-series aluminum layer member or a 3-series aluminum layer member; the second plate body 132 includes a second reinforcement layer member 1322, where the second reinforcement layer member 1322 constitutes the entire second plate body 132, and the second reinforcement layer member 1322 has the second plate surface 1321; and the first plate surface 1311 is hermetically connected to the second plate surface 1321.

In some other embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 includes a first layer body 13131 and a second layer body 13132, the first layer body 13131 and the second layer body 13132 are arranged in a stacked manner, the first layer body 13131 is a 1-series aluminum layer member or a 3-series aluminum layer member, the second layer body 13132 has the first plate surface 1311, and the second layer body 13132 is a 4-series aluminum layer member; the second plate body 132 includes a second reinforcement layer member 1322, where the second reinforcement layer member 1322 constitutes the entire second plate body 132, and the second reinforcement layer member 1322 has the second plate surface 1321; and the first plate surface 1311 is hermetically connected to the second plate surface 1321.

In yet some embodiments, the first plate body 131 includes a first reinforcement layer member 1312, where the first reinforcement layer member 1312 constitutes the entire first plate body 131, and the first reinforcement layer member 1312 has the first plate surface 1311; the second plate body 132 includes a second reinforcement layer member 1322, where the second reinforcement layer member 1322 constitutes the entire second plate body 132, and the second reinforcement layer member 1322 has the second plate surface 1321; and the first plate surface 1311 is hermetically connected to the second plate surface 1321.

By adopting the above technical solution, not only is the structural strength of the heat exchange assembly 13 effectively improved, but also the structure of the heat exchange assembly 13 is effectively simplified.

In some embodiments of the present application, the second reinforcement layer member 1322 includes at least one of a stainless steel layer member, a carbon steel layer member, a 5-series aluminum layer member, a 6-series aluminum layer member, and a 7-series aluminum layer member.

By adopting the above technical solution, the heat exchange assembly 13 can meet the requirements of yield strength and tensile strength, thereby further reducing the risk of deformation of the heat exchange assembly 13.

In some embodiments of the present application, the second reinforcement layer member 1322 has a thickness of 0.1 mm to 0.8 mm.

The thickness of the second reinforcement layer member 1322 refers to the dimension of the second reinforcement layer member 1322 in the stacking direction of the first plate body 131 and the second plate body 132, and the thicknesses of various portions of the second reinforcement layer member 1322 may be the same or different. It should be noted that in a case where the second reinforcement layer member 1322 has at least two portions with different thicknesses, the thicknesses of various portions of the second reinforcement layer member 1322 are all within a range of 0.1 mm to 0.8 mm. The thickness of the second reinforcement layer member 1322 may be determined according to actual application requirements, and may specifically be 0.1 mm, 0.2 mm, 0.3 mm, 0.4 mm, 0.5 mm, 0.6 mm, 0.7 mm, 0.8 mm, or the like.

In some embodiments, the second plate body 132 includes a second reinforcement layer member 1322 and a second connection layer member 1323, where the second reinforcement layer member 1322 and the second connection layer member 1323 are arranged in a stacked manner, the second connection layer member 1323 includes a third layer body 13231 and a fourth layer body 13232, the third layer body 13231 and the fourth layer body 13232 are arranged in a stacked manner, the fourth layer body 13232 has the second plate surface 1321, the third layer body 13231 is a 1-series aluminum layer member or a 3-series aluminum layer member, the fourth layer body 13232 is a 4-series aluminum layer member, the second reinforcement layer member 1322 is a stainless steel layer member or a carbon steel layer member, the thickness of the second reinforcement layer member 1322 is 0.1 mm to 0.5 mm, the thickness of the third layer body 13231 is 0.25 mm to 0.85 mm, and the thickness of the fourth layer body 13232 is 0.05 mm to 0.1 mm.

In some other embodiments, the second plate body 132 includes a second reinforcement layer member 1322 and a second connection layer member 1323, where the second reinforcement layer member 1322 and the second connection layer member 1323 are arranged in a stacked manner, the second connection layer member 1323 has the second plate surface 1321, the second connection layer member 1323 is an integral member, the second connection layer member 1323 is a 1-series aluminum layer member or a 3-series aluminum layer member, the second reinforcement layer member 1322 is a stainless steel layer member or a carbon steel layer member, the thickness of the second reinforcement layer member 1322 is 0.1 mm to 0.8 mm, and the thickness of the third layer body 13231 is 0.2 mm to 0.9 mm.

In yet some embodiments, the second plate body 132 includes a second reinforcement layer member 1322 and a second connection layer member 1323, where the second reinforcement layer member 1322 and the second connection layer member 1323 are arranged in a stacked manner, the second connection layer member 1323 includes a third layer body 13231 and a fourth layer body 13232, the third layer body 13231 and the fourth layer body 13232 are arranged in a stacked manner, the fourth layer body 13232 has the second plate surface 1321, the third layer body 13231 is a 1-series aluminum layer member or a 3-series aluminum layer member, the fourth layer body 13232 is a 4-series aluminum layer member, the second reinforcement layer member 1322 is a 5-series aluminum layer member, a 6-series aluminum layer member, or a 7-series aluminum layer member, the thickness of the second reinforcement layer member 1322 is 0.1 mm to 0.8 mm, the thickness of the third layer body 13231 is 0.1 mm to 0.85 mm, and the thickness of the fourth layer body 13232 is 0.05 mm to 0.1 mm.

In still some embodiments, the second plate body 132 includes a second reinforcement layer member 1322 and a second connection layer member 1323, where the second reinforcement layer member 1322 and the second connection layer member 1323 are arranged in a stacked manner, the second connection layer member 1323 has the second plate surface 1321, the second connection layer member 1323 is an integral member, the second connection layer member 1323 is a 1-series aluminum layer member or a 3-series aluminum layer member, the second reinforcement layer member 1322 is an aluminum layer member, a 6-series aluminum layer member, or a 7-series aluminum layer member, the thickness of the second reinforcement layer member 1322 is 0.1 mm to 0.8 mm, and the thickness of the third layer body 13231 is 0.2 mm to 0.9 mm.

In still some embodiments, the second plate body 132 includes a second reinforcement layer member 1322, where the second reinforcement layer member 1322 constitutes the entire second plate body 132, the second reinforcement layer member 1322 has the second plate surface 1321, the second reinforcement layer member 1322 is a stainless steel layer member or a carbon steel layer member, and the thickness of the second reinforcement layer member 1322 is 0.5 mm to 0.8 mm.

The minimum thickness of the second reinforcement layer member 1322 is 0.1 mm, such that the heat exchange assembly 13 meets the strength requirement. The maximum thickness of the second reinforcement layer member 1322 is 0.8 mm, such that the weight and size of the heat exchange assembly 13 can be optimized, thereby effectively improving the energy density of the battery 100 using the above heat exchange assembly 13.

In some embodiments of the present application, the first reinforcement layer member 1312 includes at least one of a stainless steel layer member, a carbon steel layer member, a 5-series aluminum layer member, a 6-series aluminum layer member, and a 7-series aluminum layer member.

By adopting the above technical solution, the heat exchange assembly 13 can meet the requirements of yield strength and tensile strength, thereby further reducing the risk of deformation of the heat exchange assembly 13.

In some embodiments of the present application, the first reinforcement layer member 1312 has a thickness of 0.1 mm to 0.8 mm.

The thickness of the first reinforcement layer member 1312 refers to the dimension of the first reinforcement layer member 1312 in the stacking direction of the first plate body 131 and the second plate body 132, and the thicknesses of various portions of the first reinforcement layer member 1312 may be the same or different. It should be noted that in a case where the first reinforcement layer member 1312 has at least two portions with different thicknesses, the thicknesses of various portions of the first reinforcement layer member 1312 are all within a range of 0.1 mm to 0.8 mm. The thickness of the first reinforcement layer member 1312 may be determined according to actual application requirements, and may specifically be 0.1 mm, 0.2 mm, 0.3 mm, 0.4 mm, 0.5 mm, 0.6 mm, 0.7 mm, 0.8 mm, or the like.

In some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 includes a first layer body 13131 and a second layer body 13132, the first layer body 13131 and the second layer body 13132 are arranged in a stacked manner, the second layer body 13132 has the first plate surface 1311, the first layer body 13131 is a 1-series aluminum layer member or a 3-series aluminum layer member, the second layer body 13132 is a 4-series aluminum layer member, the first reinforcement layer member 1312 is a stainless steel layer member or a carbon steel layer member, the thickness of the first reinforcement layer member 1312 is 0.1 mm to 0.5 mm, the thickness of the first layer body 13131 is 0.25 mm to 0.85 mm, and the thickness of the second layer body 13132 is 0.05 mm to 0.1 mm.

In some other embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 has the first plate surface 1311, the first connection layer member 1313 is an integral member, the first connection layer member 1313 is a 1-series aluminum layer member or a 3-series aluminum layer member, the first reinforcement layer member 1312 is a stainless steel layer member or a carbon steel layer member, the thickness of the first reinforcement layer member 1312 is 0.1 mm to 0.8 mm, and the thickness of the first layer body 13131 is 0.2 mm to 0.9 mm.

In yet some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 includes a first layer body 13131 and a second layer body 13132, the first layer body 13131 and the second layer body 13132 are arranged in a stacked manner, the second layer body 13132 has the first plate surface 1311, the first layer body 13131 is a 1-series aluminum layer member or a 3-series aluminum layer member, the second layer body 13132 is a 4-series aluminum layer member, the first reinforcement layer member 1312 is a 5-series aluminum layer member, a 6-series aluminum layer member, or a 7-series aluminum layer member, the thickness of the first reinforcement layer member 1312 is 0.1 mm to 0.8 mm, the thickness of the first layer body 13131 is 0.1 mm to 0.85 mm, and the thickness of the second layer body 13132 is 0.05 mm to 0.1 mm.

In still some embodiments, the first plate body 131 includes a first reinforcement layer member 1312 and a first connection layer member 1313, where the first reinforcement layer member 1312 and the first connection layer member 1313 are arranged in a stacked manner, the first connection layer member 1313 has the first plate surface 1311, the first connection layer member 1313 is an integral member, the first connection layer member 1313 is a 1-series aluminum layer member or a 3-series aluminum layer member, the first reinforcement layer member 1312 is an aluminum layer member, a 6-series aluminum layer member, or a 7-series aluminum layer member, the thickness of the first reinforcement layer member 1312 is 0.1 mm to 0.8 mm, and the thickness of the first layer body 13131 is 0.2 mm to 0.9 mm.

In still some embodiments, the first plate body 131 includes a first reinforcement layer member 1312, where the first reinforcement layer member 1312 constitutes the entire first plate body 131, the first reinforcement layer member 1312 has the first plate surface 1311, the first reinforcement layer member 1312 is a stainless steel layer member or a carbon steel layer member, and the thickness of the first reinforcement layer member 1312 is 0.5 mm to 0.8 mm.

The minimum thickness of the first reinforcement layer member 1312 is 0.1 mm, such that the heat exchange assembly 13 meets the strength requirement. The maximum thickness of the first reinforcement layer member 1312 is 0.8 mm, such that the weight and size of the heat exchange assembly 13 can be optimized, thereby effectively improving the energy density of the battery 100 using the above heat exchange assembly 13.

In some embodiments of the present application, a first anti-corrosion layer (not shown in the figure) is provided on the first plate surface 1311.

In some other embodiments of the present application, a second anti-corrosion layer (not shown in the figure) is provided on the second plate surface 1321.

In yet some embodiments of the present application, a first anti-corrosion layer is provided on the first plate surface 1311, and a second anti-corrosion layer is provided on the second plate surface 1321.

The first anti-corrosion layer and the second anti-corrosion layer are layer structures having an anti-corrosion function for alleviating corrosion of the first plate body 131 and the second plate body 132 by the heat exchange medium. The first anti-corrosion layer may be provided on the first plate surface 1311 by a process such as an electroplating process, a plastic spraying process, or a coating process. Similarly, the second anti-corrosion layer may be provided on the second plate surface 1321 by a process such as an electroplating process, a plastic spraying process, or a coating process. The first anti-corrosion layer and the second anti-corrosion layer may be, but are not limited to, nickel layers, aluminum-silicon layers, zinc-nickel layers, or the like.

By adopting the above technical solution, the risk of the first plate body 131 and the second plate body 132 being in contact with the heat exchange medium is effectively reduced, thereby effectively alleviating corrosion of the first plate body 131 and the second plate body 132 by the heat exchange medium.

In some embodiments of the present application, a first heat-resistant layer (not shown in the figure) is provided on the first plate surface 1311.

In some other embodiments of the present application, a second heat-resistant layer (not shown in the figure) is provided on the second plate surface 1321.

In some other embodiments of the present application, a first heat-resistant layer is provided on the first plate surface 1311, and a second heat-resistant layer is provided on the second plate surface 1321.

The first heat-resistant layer and the second heat-resistant layer are layer structures having a heat insulation function for reducing heat transfer to the interior of the first plate body 131 and the interior of the second plate body 132, thereby reducing the risk of delamination between the first plate body 131 and the second plate body 132. The first heat-resistant layer may be provided on the first plate surface 1311 by a process such as an electroplating process, a plastic spraying process, or a coating process. Similarly, the second heat-resistant layer may be provided on the second plate surface 1321 by a process such as an electroplating process, a plastic spraying process, or a coating process.

In some embodiments, the first heat-resistant layer and the first anti-corrosion layer form a composite layer structure, and the second heat-resistant layer and the second anti-corrosion layer form a composite layer structure.

By adopting the above technical solution, in a case where the first plate body 131 is welded to the second plate body 132, heat can be blocked from being transferred from the first plate surface 1311 to each layer structure of the first plate body 131 and from the second plate surface 1321 to each layer structure of the second plate body 132, thereby effectively alleviating thermal expansion of the first plate body 131 and the second plate body 132, and effectively reducing the risk of delamination between the first plate body 131 and the second plate body 132.

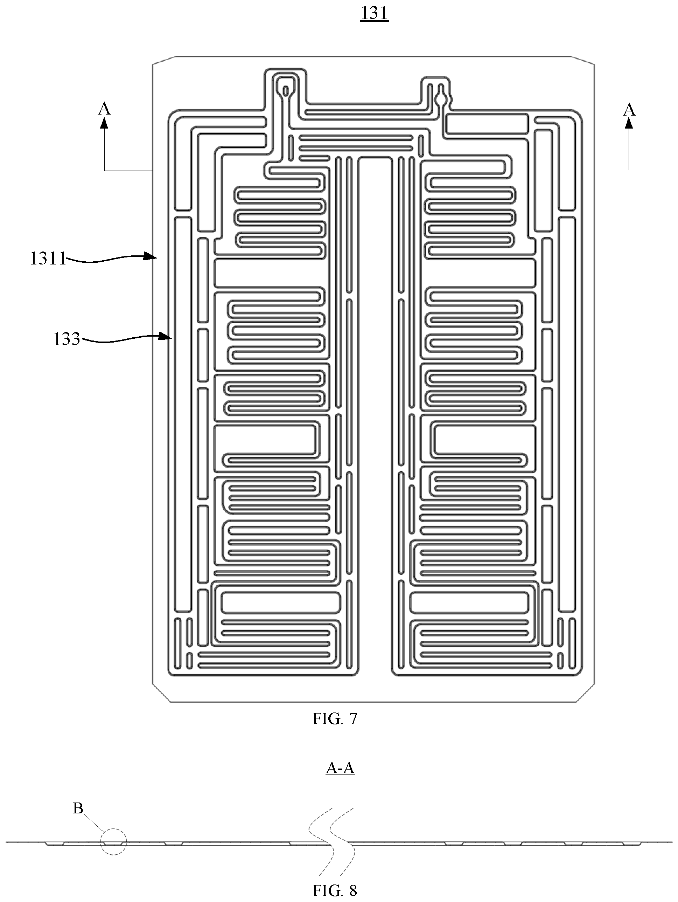

In some embodiments of the present application, referring to FIG. 7 to FIG. 9 together, the depth H of the heat exchange flow channel 133 is 3 mm to 3.5 mm.

The depth H of the heat exchange flow channel 133 refers to the dimension of the heat exchange flow channel 133 in the stacking direction of the first plate body 131 and the second plate body 132. The depth H of the heat exchange flow channel 133 may be determined according to actual application requirements, and may specifically be 3 mm, 3.1 mm, 3.2 mm, 3.3 mm, 3.4 mm, 3.5 mm, or the like.

In the related art, if the depth H of the heat exchange flow channel 133 is too large, the heat exchange assembly 13 is prone to cracking during formation of the heat exchange flow channel 133. By adopting the above technical solution, the risk of cracking of the heat exchange assembly 13 during formation of the heat exchange flow channel 133 is effectively reduced.

In some embodiments of the present application, referring to FIG. 7 to FIG. 9 together, the width W of the heat exchange flow channel 133 is 3 mm to 5 mm.

The width W of the heat exchange flow channel 133 refers to the dimension of the heat exchange flow channel 133 in the direction perpendicular to the stacking direction of the first plate body 131 and the second plate body 132 and the extending direction of the heat exchange flow channel 133. The width W of the heat exchange flow channel 133 may be determined according to actual application requirements, and may specifically be 3 mm, 3.1 mm, 3.2 mm, 3.3 mm, 3.4 mm, 3.5 mm, or the like.

In the related art, if the width W of the heat exchange flow channel 133 is too large, the heat exchange assembly 13 is prone to cracking during formation of the heat exchange flow channel 133. By adopting the above technical solution, the risk of cracking of the heat exchange assembly 13 during formation of the heat exchange flow channel 133 is effectively reduced.

In some embodiments of the present application, referring to FIG. 7 to FIG. 9 together, a wall body of the heat exchange flow channel 133 has a corner portion 1331, and the corner portion 1331 is in a rounded corner structure.

It should be noted that, in a case where the heat exchange flow channel 133 is provided on the first plate surface 1311, the corner portion 1331 may be a portion of the first plate body 131 for being connected to a side wall of the heat exchange flow channel 133 and a bottom wall of the first plate body 131, or may be a portion of the first plate body 131 for being connected to a side wall of the heat exchange flow channel 133 and a top wall of the first plate body 131, where the bottom wall of the first plate body 131 refers to a wall body of the first plate body 131 farthest from the second plate body 132 in the stacking direction of the first plate body 131 and the second plate body 132, that is, a bottom wall of the heat exchange flow channel 133, and the top wall of the first plate body 131 refers to a wall body of the first plate body 131 closest to the second plate body 132 in the stacking direction of the first plate body 131 and the second plate body 132. In a case where the heat exchange flow channel 133 is provided on the second plate surface 1321, the corner portion 1331 may be a portion of the second plate body 132 for being connected to the side wall of the heat exchange flow channel 133 and a bottom wall of the second plate body 132, or may be a portion of the second plate body 132 for being connected to a side wall of the heat exchange flow channel 133 and a top wall of the second plate body 132, where the bottom wall of the second plate body 132 refers to a wall body of the second plate body 132 farthest from the first plate body 131 in the stacking direction of the first plate body 131 and the second plate body 132, that is, the bottom wall of the heat exchange flow channel 133, and the top wall of the second plate body 132 refers to a wall body of the second plate body 132 closest to the first plate body 131 in the stacking direction of the first plate body 131 and the second plate body 132.

By adopting the above technical solution, the stress borne by the heat exchange assembly 13 during formation of the heat exchange flow channel 133 is effectively reduced, thereby effectively reducing the risk of cracking of the heat exchange assembly 13.

In some embodiments in the present application, referring to FIG. 7 to FIG. 9 together, the rounded corner structure has a radius R of 2 mm to 8 mm.

The radius R of the rounded corner structure may be determined according to actual application requirements, and may specifically be 2 mm, 3 mm, 4 mm, 5 mm, 6 mm, 7 mm, 8 mm, or the like.

By adopting the above technical solution, the risk of cracking of the heat exchange assembly 13 during formation of the heat exchange flow channel 133 is further reduced.

In a second aspect, referring to FIG. 2, the embodiments of the present application further provide a box body 10, including a frame and the heat exchange assembly 13 according to any one of the above embodiments, where the frame is connected to the heat exchange assembly 13 to define an accommodating space for accommodating the battery cell 20.

The box body 10 according to the embodiment of the present application is effectively improved in structural strength due to the use of the heat exchange assembly 13 according to any one of the above embodiments.

In some embodiments of the present application, the first reinforcement layer member 1312 is welded to the frame, and the first reinforcement layer member 1312 is made of the same material as the frame.

In some embodiments, the first reinforcement layer member 1312 is a steel layer member, the frame is a steel frame, and the first reinforcement layer member 1312 is welded to the frame.

By adopting the above technical solution, the connection strength between the heat exchange assembly 13 and the frame is effectively improved.

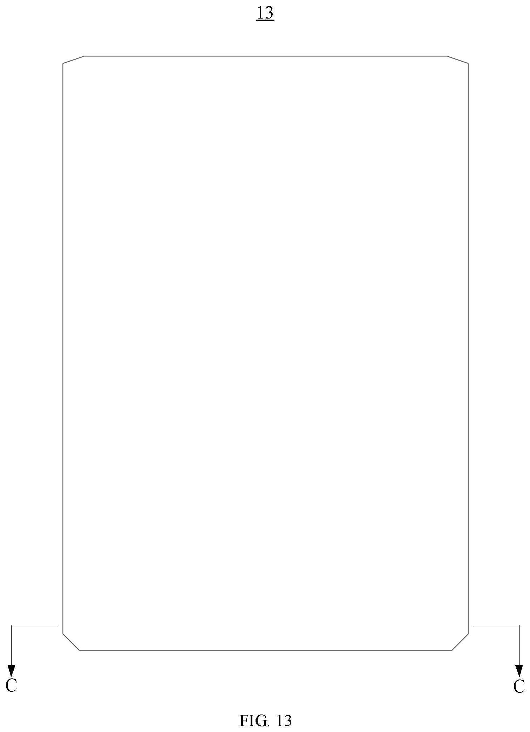

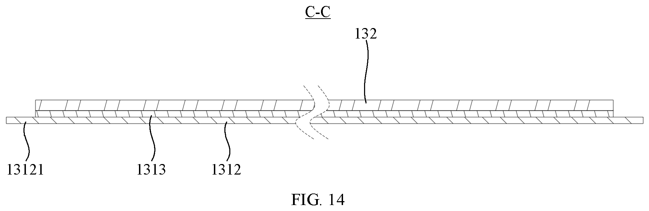

In some embodiments of the present application, referring to FIG. 13 and FIG. 14 together, at least part of the first reinforcement layer member 1312 extends beyond a side of the second plate body 132 to form a welding portion 13121, and one side of the welding portion 13121 facing the second plate body 132 is welded to the frame.

In some embodiments, two opposite sides of the first reinforcement layer member 1312 extend beyond a side of the second plate body 132 to form two welding portions 13121, and the two welding portions 13121 are welded to the frame.

In some other embodiments, a peripheral side of the first reinforcement layer member 1312 extends beyond a side of the second plate body 132 to form a welding portion 13121 in an annular structure, and the welding portion 13121 is welded to the frame.

It should be noted that, in a case where the first plate body 131 includes a first connection layer member 1313, and the second plate body 132 includes a second connection layer member 1323 but does not include a second reinforcement layer member 1322, a side of the first connection layer member 1313 and a side of the second connection layer member 1323 may be peeled off, such that a side of the first reinforcement layer member 1312 extends beyond a side of the second plate body 132 to form a welding portion 13121. Alternatively, in a case where the first plate body 131 does not include a first connection layer member 1313, and the second plate body 132 includes a second connection layer member 1323 but does not include a second reinforcement layer member 1322, a side of the second connection layer member 1323 may be peeled off, such that a side of the first reinforcement layer member 1312 extends beyond a side of the second plate body 132 to form a welding portion 13121.

By adopting the above technical solution, the heat exchange assembly 13 can be conveniently connected to the frame.

In a third aspect, referring to FIG. 2, the embodiments of the present application further provide a battery 100, including a battery cell 20 and the box body 10 according to any one of the above embodiments, where the battery cell 20 is accommodated in the accommodating space, and the heat exchange assembly 13 is configured to regulate the temperature of the battery cell 20.

The battery 100 according to the embodiment of the present application is effectively improved in structural strength due to the use of the box body 10 according to any one of the above embodiments.

In a fourth aspect, referring to FIG. 1, the embodiments of the present application further provide an electrical device, including the above battery 100.

The electrical device according to the embodiment of the present application is effectively improved in structural strength due to the use of the above battery 100.

The above are only the preferred embodiments of the present application and are not intended to limit the present application. Any modifications, equivalent replacements, improvements, etc. made within the spirit and principles of the present application shall be included in the scope of protection of the present application.

## Claims

1. A heat exchange assembly, comprising:
a first plate body, having a first plate surface and comprising a first reinforcement layer member; and
a second plate body, stacked with the first plate body and having a second plate surface,
a heat exchange flow channel being provided on the first plate surface and/or the second plate surface, the first plate surface being hermetically connected to the second plate surface to enclose the heat exchange flow channel, and at least part of a projection of the heat exchange flow channel on a reference plane overlapping with a projection of the first reinforcement layer member on the reference plane, wherein the reference plane is perpendicular to a stacking direction of the first plate body and the second plate body.

2. The heat exchange assembly according to claim 1, wherein the first plate body further comprises a first connection layer member stacked on one side of the first reinforcement layer member facing the second plate body, and the first connection layer member has the first plate surface.

3. The heat exchange assembly according to claim 2, wherein the first connection layer member is welded to the second plate body.

4. The heat exchange assembly according to claim 2 or 3, wherein the first connection layer member is an aluminum layer member.

5. The heat exchange assembly according to claim 4, wherein the first connection layer member comprises at least one of a 1-series aluminum layer member, a 3-series aluminum layer member, and a 4-series aluminum layer member.

6. The heat exchange assembly according to any one of claims 2 to 5, wherein the first connection layer member has a thickness of 0.2 mm to 0.9 mm.

7. The heat exchange assembly according to any one of claims 2 to 6, wherein the first connection layer member comprises a first layer body and a second layer body, the first layer body is stacked between the first reinforcement layer member and the second layer body, the second layer body has the first plate surface, and the second layer body has a lower melting point than the first layer body.

8. The heat exchange assembly according to claim 7, wherein the first layer body is a 3-series aluminum layer body or a 1-series aluminum layer body, and the second layer body is a 4-series aluminum layer body.

9. The heat exchange assembly according to claim 7 or 8, wherein the first layer body has a thickness of 0.1 mm to 0.85 mm.

10. The heat exchange assembly according to any one of claims 7 to 9, wherein the second layer body has a thickness of 0.05 mm to 0.1 mm.

11. The heat exchange assembly according to claim 1, wherein the first reinforcement layer member has the first plate surface.

12. The heat exchange assembly according to any one of claims 1 to 11, wherein the second plate body comprises a second connection layer member, and the second connection layer member has the second plate surface.

13. The heat exchange assembly according to claim 12, wherein the second connection layer member is welded to the first plate body.

14. The heat exchange assembly according to claim 12 or 13, wherein the second connection layer member is an aluminum layer member.

15. The heat exchange assembly according to claim 14, wherein the second connection layer member comprises at least one of the 1-series aluminum layer member, the 3-series aluminum layer member, and the 4-series aluminum layer member.

16. The heat exchange assembly according to any one of claims 12 to 15, wherein the second connection layer member has a thickness of 0.2 mm to 0.9 mm.

17. The heat exchange assembly according to any one of claims 12 to 16, wherein the second connection layer member comprises a third layer body and a fourth layer body arranged in a stacked manner, the fourth layer body is disposed on one side of the third layer body facing the first plate body, the fourth layer body has the second plate surface, and the fourth layer body has a lower melting point than the third layer body.

18. The heat exchange assembly according to claim 17, wherein the third layer body is the 3-series aluminum layer body or the 1-series aluminum layer body, and the fourth layer body is the 4-series aluminum layer body.

19. The heat exchange assembly according to claim 17 or 18, wherein the third layer body has a thickness of 0.1 mm to 0.85 mm.

20. The heat exchange assembly according to any one of claims 17 to 19, wherein the fourth layer body has a thickness of 0.05 mm to 0.1 mm.

21. The heat exchange assembly according to any one of claims 12 to 20, wherein the second plate body further comprises a second reinforcement layer member, the second reinforcement layer member is stacked on one side of the second connection layer member facing away from the first plate body, and at least part of the projection of the heat exchange flow channel on the reference plane overlaps with a projection of the second reinforcement layer member on the reference plane.

22. The heat exchange assembly according to any one of claims 1 to 11, wherein the second plate body further comprises a second reinforcement layer member, the second reinforcement layer member has the second plate surface, and at least part of the projection of the heat exchange flow channel on the reference plane overlaps with a projection of the second reinforcement layer member on the reference plane.

23. The heat exchange assembly according to claim 21 or 22, wherein the second reinforcement layer member comprises at least one of a stainless steel layer member, a carbon steel layer member, a 5-series aluminum layer member, a 6-series aluminum layer member, and a 7-series aluminum layer member.

24. The heat exchange assembly according to claim 23, wherein the second reinforcement layer member has a thickness of 0.1 mm to 0.8 mm.

25. The heat exchange assembly according to any one of claims 1 to 24, wherein the first reinforcement layer member comprises at least one of the stainless steel layer member, the carbon steel layer member, the 5-series aluminum layer member, the 6-series aluminum layer member, and the 7-series aluminum layer member.

26. The heat exchange assembly according to claim 25, wherein the first reinforcement layer member has a thickness of 0.1 mm to 0.8 mm.

27. The heat exchange assembly according to any one of claims 1 to 26, wherein
a first anti-corrosion layer is provided on the first plate surface; and/or
a second anti-corrosion layer is provided on the second plate surface.

28. The heat exchange assembly according to any one of claims 1 to 27, wherein
a first heat-resistant layer is provided on the first plate surface; and/or
a second heat-resistant layer is provided on the second plate surface.

29. The heat exchange assembly according to any one of claims 1 to 28, wherein the heat exchange flow channel has a depth of 3 mm to 3.5 mm.

30. The heat exchange assembly according to any one of claims 1 to 29, wherein the heat exchange flow channel has a width of 3 mm to 5 mm.

31. The heat exchange assembly according to any one of claims 1 to 30, wherein a wall body of the heat exchange flow channel has a corner portion, and the corner portion is in a rounded corner structure.

32. The heat exchange assembly according to claim 31, wherein the rounded corner structure has a radius of 2 mm to 8 mm.

33. A box body, comprising a frame and the heat exchange assembly according to any one of claims 1 to 32, wherein the frame is connected to the heat exchange assembly to define an accommodating space for accommodating a battery cell.

34. The box body according to claim 33, wherein the first reinforcement layer member is welded to the frame, and the first reinforcement layer member is made of the same material as the frame.

35. The box body according to claim 34, wherein at least part of the first reinforcement layer member extends beyond a side of the second plate body to form a welding portion, and one side of the welding portion facing the second plate body is welded to the frame.

36. A battery, comprising a battery cell and the box body according to any one of claims 33 to 35, wherein the battery cell is accommodated in the accommodating space, and the heat exchange assembly is configured to regulate a temperature of the battery cell.

37. An electrical device, comprising the battery according to claim 36.
